Europäisches Patentamt

European Patent Office

Office européen des brevets

(19)

(11) Publication number : **0 642 824 A1**

(12) **EUROPEAN PATENT APPLICATION**

(21) Application number : **94830385.4**

(22) Date of filing : **28.07.94**

(51) Int. Cl.$^6$ : **B01D 61/44, C02F 1/469**

(30) Priority : **14.09.93 SK 99293**

(43) Date of publication of application :
**15.03.95 Bulletin 95/11**

(84) Designated Contracting States :
**AT BE CH DE ES FR GB IT LI NL PT SE**

(71) Applicant : **MONTETITANO S.A.**
**Via 3 Settembre, 11**
**SM-47031 Serravalle (SM)**

(72) Inventor : **Cumakov, Alexander, Montetitano S.A.**
**Via 3 Settembre, 11**
**SM-47031 Serravalle (SM)**
Inventor : **Cervanak, Jan, Montetitano S.A.**
**Via 3 Settembre, 11**
**SM-47031 Serravalle (SM)**
Inventor : **Hanic, Frantisek, Montetitano S.A.**
**Via 3 Settembre, 11**
**SM-47031 Serravalle (SM)**
Inventor : **Smatko, Vasil, Montetitano S.A.**
**Via 3 Settembre, 11**
**SM-47031 Serravalle (SM)**

(74) Representative : **Cicogna, Franco**
**Ufficio Internazionale Brevetti**
**Dott.Prof. Franco Cicogna**
**Via Visconti di Modrone, 14/A**
**I-20122 Milano (IT)**

(54) **Method for adjusting the pH of water to a value adjustable in the range from 1 to 13 and apparatus for carrying out said method.**

(57)    The present invention relates to a method for adjusting the pH of water to a value adjustable in the range from 1 to 13 and an apparatus for carrying out said method. The method comprises the arrangement for adjusting the pH of water in at least one step of a cascade system, in which said step comprises an electrodialysis cell, with one or two membranes or one or more pairs of selective membranes which can be controllably displaced between the electrodes (cathode and anode) perpendicularly to the water flow traversing the cell so as to obtain a variation of the adjustment of the pH of the water processed in the cell. Unseparable processes coupled with adjusting the pH of water in catholyte (electrolyte from the cathodic cell) and anolyte telectrolyte from the anodic cell) are changes in the chemical composition of water solutions.

Fig. 1

EP 0 642 824 A1

## BACKGROUND OF THE INVENTION

The present invention relates to a method for adjusting the pH of water to a value which can be adjusted in the range of 1 to 13 and an apparatus for carrying out said method, as well as further relating to an application of the thus adjusted water so as to improve the properties of soils.

As disclosed in articles and data published in scientific and technical papers and in newspapers, books and patents, a lot of instruments and methods are used for adjusting the pH of water and aqueous solutions, in precipitating and dissolving processes, in aqueous solutions, electrocoagulation, in the preparation of disinfectant water or ionized water, in the removal of metal ions or nitrates of volatile components from aqueous solutions, and so on, and these methods are based on electrolysis, electrodialysis, electroosmosis or other chemical or electrochemical processes. In all the patented electrodialysis arrangements, the cells comprise cathode parts and anode parts which are separated by membranes.

The USA patent No. 4936962, having for title: "Process for adjusting the pH of an aqueous flowable fluid" relates to the adjustment of the pH of water by a circulation of an electrolyte, the two electrodes being separated by pairs of membranes: a membrane being of a bipolar type and the other being selective to the ions.

The EPO Patent No. EP-0247852 having for title: "Process and apparatus for producing aqueous ion-containing solution" relates to the adjustment of the water pH in an electrolytic cell, the electrodes of which are separated by a membrane and in which silver ions are introduced into the electrolyte by a partial dissolution of the silver electrode.

Aqueous acid and base media are disclosed in the USA Patent No. 4880513 having for title "Method and apparatus for generating acid and base regenerants and the use thereof to regenerate ion-exchange resins", with respect to the recirculation of the electrolyte in an electrolyte supplied by a bipolar membrane.

An apparatus for preparing acid and basic water, which does not use any membrane, has been disclosed in the EPO patent No. EP 0531783 having for title "Water draining system for an apparatus producing ion containing water by continuous electrolysis".

The EPO patent No. EP-039107 having for title: "Ion concentration setting apparatus for ionic water" discloses a possibility of obtaining a required ionic concentration in acid or basic water by controlling the potential or voltage applied to set electrodes and by using electrodialysis membranes.

The above mentioned patents do not suggest any possibility for increasing the effect of the electrodic potential or voltage on aqueous media by using a cascade type of system. They do not disclose, in particular, an adjustable method for preparing acid or basic water by asymmetrically locating a membrane. They, moreover, do not suggest or consider the possibility of forming chemical transition species in the electric bilayers on the electrodes, in which said species are adapted to catalyze an oxidation or reduction reaction in the electrolyte so as to provide structural transitions between ionic and molecular states by means of a process in which are formed hydrated agglomerates and, accordingly, so as that they operate as pH buffers.

Such a transition compound, for example, consists of hydrogen peroxide obtained by oxidizing hydroxide anions through an active form of oxygen atoms on the electrode as ionic species of the type $(HO_2)^-$. These ions can be easily transformed within the group $(HO_2^-)(H_2O)^n$ into a neutral form $H_2O_2$, with a simultaneous generation of hydroxide ions. The hydrogen peroxide and ionized forms thereof affect the antiseptic properties of the acid water, the oxidizing effects in aqueous acid fluids (release of elementary iodine from potassium iodide, oxidation of molecular nitrogen), while affecting also the solubility of mineral substances in the soil as the adjusted water, upon electrodialysis, inter-acts with the soil.

The requirement of properly adjusting the pH of acid or alkaline soils with respect to a normal pH value and of the adjustment of the contents of salts in oversalted soils is increasingly felt because of the increasing amount of degraded agricultural and the like soils because of acid rains and salt accumulating processes, and this through the overall world.

Two main methods have been used for desalting oversalted soils. The first of these methods comprises a direct irrigation and ablation of over-salted soils by means of calcium ion saturated water. Such an aqueous solution is able of washing away Na ions bound in the soil. It is in this case necessary to control the chemical composition of the irrigation solution.

The second method is more expensive. It comprises the application of additives for transforming calcium sulphate, $CaSO_4$, in wet soil, into a soluble form, that is sodium sulphate, which can be removed from the top surface of the soil by the irrigation rain.

The acid soils having a pH value less than 5.5 will require a great amount of calcium with a consequent great consume of limestone.

## SUMMARY OF THE INVENTION

Accordingly, the aim of the present invention is to provide such a method allowing to adjust the pH of water in a physical manner, without using any chemical mixture (i.e. acids or bases).

Within the scope of the above mentioned aim, a main object ot the present invention is to provide such a method which allows to physically adjust the pH of water, so as to increase the pH value in very acid soils or reduce the undesired amount of salts exceeding the regular salts amount in over-salted soils or alkaline soils, in particular by removing, by a washing action, the calcium ions and removing, in a less degree, with respect to the use of distilled water, spring water or rain water, the potassium and sodium ions.

Another object of the present invention is to provide such a method which can be also used for purifying water so as to greatly reduce its radioactive, polluting, toxic and microbiologic contents.

Yet another object of the present invention is to provide such a method which can also by used for making drinking water.

Yet another object of the present invention is to provide an apparatus for carrying out the method of the invention.

According to one aspect of the present invention, the above mentioned aim and objects, as well as yet other object, which will become more apparent hereinafter are achieved by a method for adjusting the value of the pH or water in a range from 1 to 13, characterized in that the adjustment of the value of the pH of water is carried out in at least one step of a cascade system, said step comprising an electrodialysis cell with controllably movable membranes which can be displaced between the electrodes (cathode and anode) perpendicularly to the water flow through said cell, for a variation of the adjustment of the pH of water processed in said cell.

For carrying out the method according to the present invention there is provided an apparatus for adjusting the pH of water in a range from 1 to 13, characterized in that said apparatus comprises at least an electrodialysis cell with two inlet ports and two outlet ports for the water flow, two electrodes (cathode and anode) arranged in said cell, and at least a membrane arranged between said electrodes, said membrane being adapted to be controllably driven along a direction perpendicular to the water flow through said cell for a variation of the distance of said membrane from said electrodes involving a variation of the pH of the processed water.

The adjusted pH water prepared by the method according to the present invention is preferably used for processing very acid or alkaline soils to adjust the pH value thereof to regular pH values by means of acid water having a pH value less than 7 in the case of alkaline soils, and by means of basic water having a pH value greater than 7 in the case of acid soils or by exploiting the combined effects of the two types of water, the pH of said water being adjusted, in a range from 1 to 13, in an electrodialysis apparatus of the above mentioned type for carrying out the method according to the invention in which the variation of the pH value is obtained without using chemical aids (acids or bases).

## BRIEF DESCRIPTION OF THE DRAWINGS

Further characteristics and advantages of the present invention will become more apparent hereinafter from the detailed disclosure of a preferred, though not exclusive, embodiment of the method according to the invention, as well as of an apparatus for carrying out said method, which are illustrated, by way of an indicative but not limitative example, in the accompanying drawings, where:

Figure 1 illustrates a schematic diagram of the cascade apparatus for adjusting the pH of water, in a range from 1 to 13, according to the present invention;

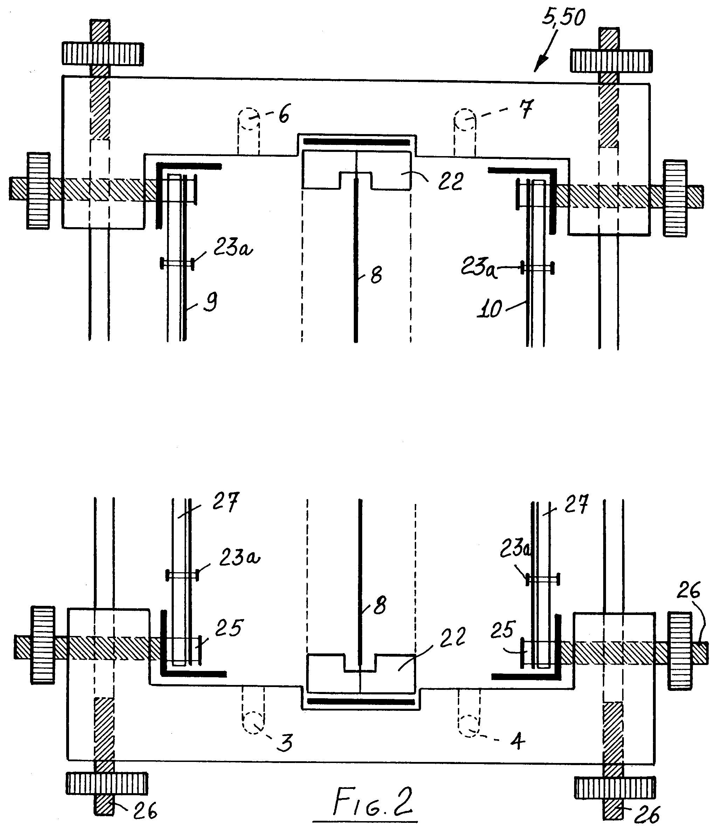

Figure 2 is an elevation view illustrating an electrodialysis cell of the apparatus for carrying out the pH adjusting method according to the present invention;

Figure 3 illustrates a relationship between the pH value of the adjusted water and the time t of the adjustment process or method in an electrodialysis cell;

Figure 4 illustrates the relationship between the value of the pH of the processed water and the adjustment process time in a plurality of electrodialysis cells cascade arranged;

Figure 5 illustrates the relationship between the value of the pH of the processed soil and the reaction time t between the soil and the adjusted water having a selected pH value, and

Figure 6 illustrates the activity of the pH adjusted water in eluting sodium, potassium, calcium from a soil processed by this water.

## DESCRIPTION OF THE PREFERRED EMBODIMENT

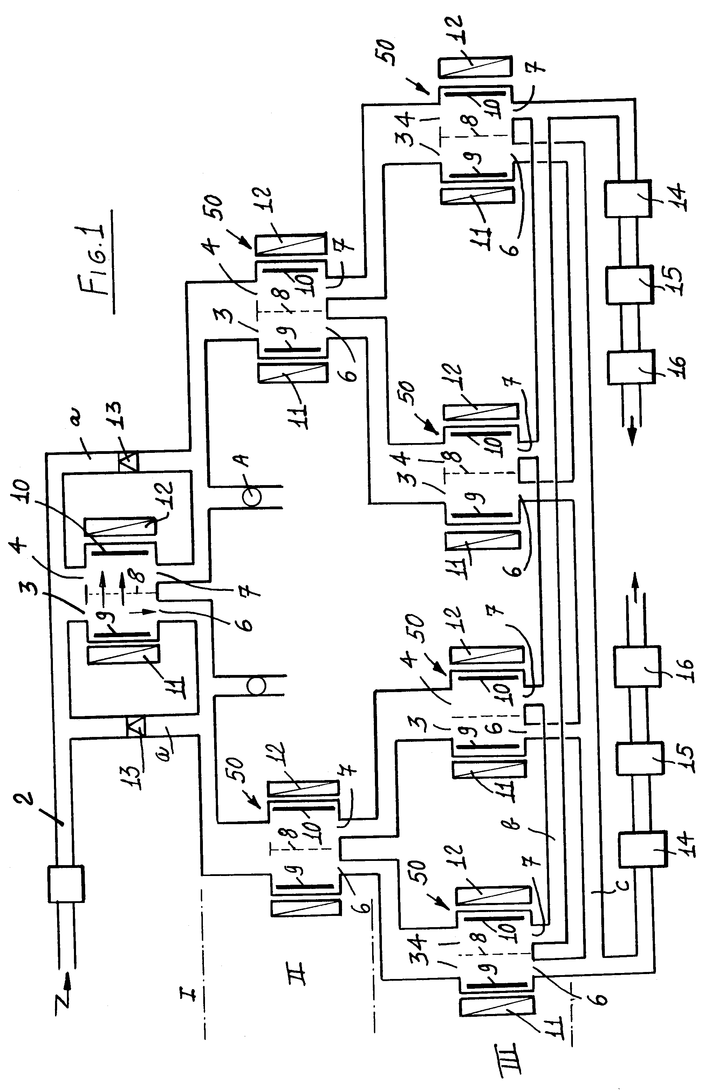

With reference to Figure 1, the apparatus for carrying out the method according to the present invention comprises at least an electrodialysis cell 5 having two inlet ports 3 and 4 which are coupled to a pipe 2 therethrough water coming from different sources (rain water, mineral water, spring water, distilled water) is supplied to the cell 5.

Inside the cell 5 there are provided two electrodes 9 and 10 and, between said two electrodes, there is arranged at least a membrane 8 which can be controllably driven in a direction which is substantially perpendicular to the water flow direction, that is the direction of the water flow through the cell 5, in order to change the spacing of said membrane from the electrodes 9 and 10 with a consequent variation of the pH of the water processed in the cell 5.

More specifically, the cell 5 is provided with two outlets 6 and 7 which, likewise the ports or openings 3 and 4, are arranged one on a side and the other on the other side of the membrane 8. Thus, the cell 5 is divided by said membrane 8 into a cathode chamber and an anode chamber.

From the outlets 6 and 7 there extend ducts supplying other electrodialysis cells 50 which are substantially made as the disclosed cell 5 and which are arranged in cascade therewith. Thus, the cell 5 will constitute the first processing stage (I) of a plurality of processing stages (I, II, III) which are cascade arranged.

Through the outlet ducts from the outlets 6 and 7 there are provided slots 4 for receiving therein pH measuring devices, or pH-meters, as well as being moreover provided branches (a) thereon there are arranged pumps 13 for recirculating the water exiting the cell 5 again toward the cell 5.

For each stage of the apparatus there is provided the possibility of recirculating the water being processed in the receiving stage or stages, or the possibility of unloading said processed water downstream of each processing stage, depending on requirements.

The end outlets (b) and (c) include therein a device 14 for measuring the pH, a device 15 for measuring the water hardness and a device 16 for measuring the water conductivity.

To the outer walls of the cells 5, 50 there are applied two magnets 11 and 12 generating a magnetic field which is oriented perpendicularly to the water flow traversing the cell 5, 50.

The main parameters affecting the method for adjusting the water pH value are the potential E of the electric field, the magnetic induction, the water flow speed $V_v$ in the cells of the cascade stages, the water temperature T, the ratio between the cathode and anode spaces $V_1/V_2$, between the movable membrane and the electrodes, and the adjusting reaction time t.

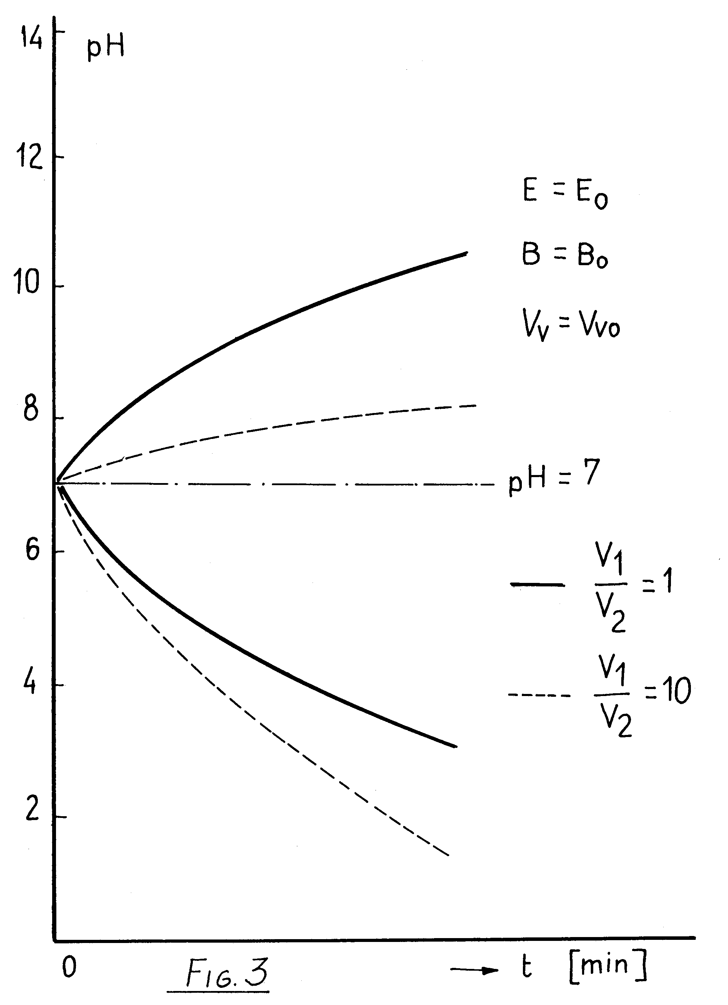

Figure 3 illustrates the dependence of the adjusted water pH value on the adjusting method or process time t, in particular the operating time of the electric and magnetic fields, E and B, and on the water flow speed $V_v$. The parameters selected in the first stage I of the cascade arrangement are indicated by the references $E_o$, $B_o$ and $V_{vo}$. The solid line represents the dependence of the pH values on the time t in a case in which the movable membrane 8 is equispaced (symmetrically arranged) from the electrodes 9 and 10 and from the electric field on the cell 5, thereby the ratio of the cathode and anode spaces will be equal to 1, i.e. $V_1 = V_2$. The dashed line represents the dependence of the pH values on the time t in a case in which the movable membrane 8 is arranged at an offset position (an asymmetric position) between the electrodes 9 and 10, in which $V_1$ is different from $V_2$, in which, more specifically, is $V_1 = 10 \ V_2$, where $V_1$ is the space between the electrode 9 and movable membrane 8, and $V_2$ is the space between the electrode 10 and the movable membrane 8 in the first stage 1 of the cascade arrangement. The dot and dash line represents the relationship between the values of the pH and the time t for the starting water.

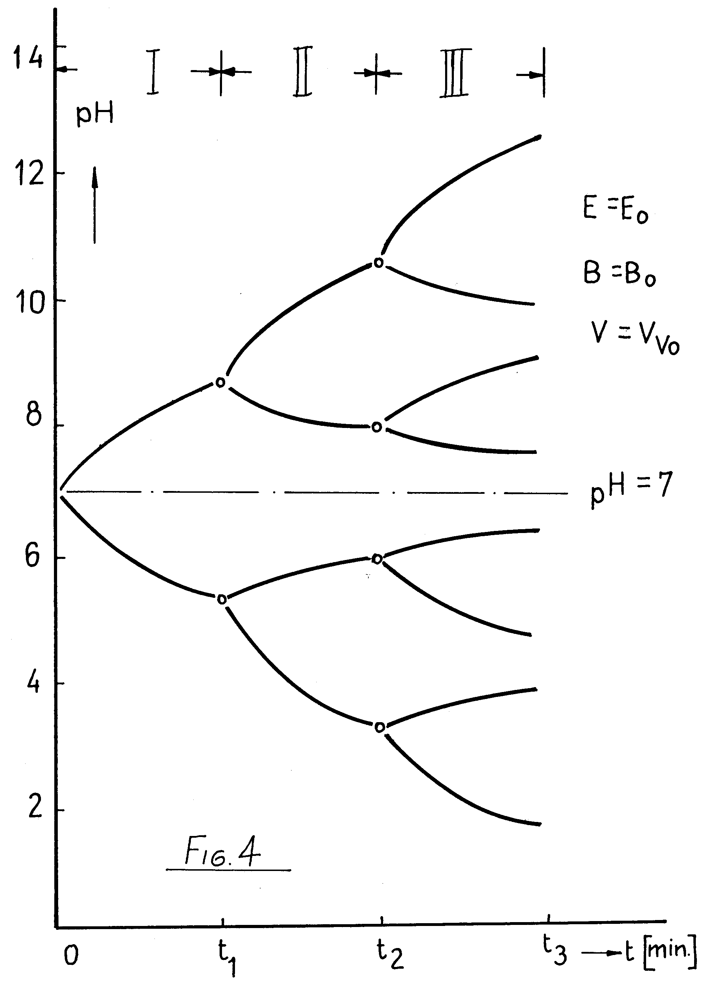

Figure 4 illustrates the relationship between the value of the pH of the processed water and the adjusting process time for the selected parameters for the electric field $E=E_o$, magnetic field $B=B_o$ and water flow speed $V_v=V_o$ in the cascade arrangement or system with three stages I, II, III of the cascade and with equal cathode and anode spaces between the electrodes 9 and 10 and the membrane 8, i.e. with $V_1 = V_2$.

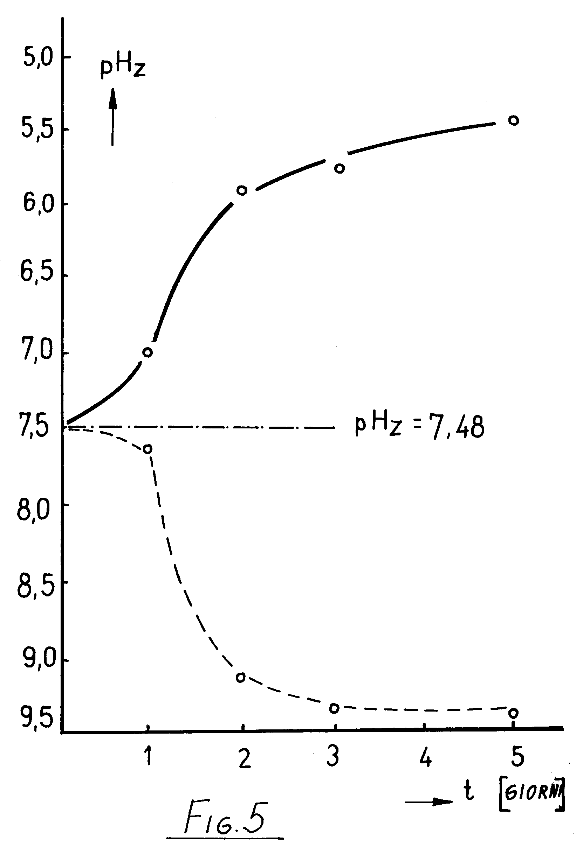

Figure 5 illustrates the relationship between the value of the $pH_z$ of the analyzed soil and the reaction time t between the soil and the adjusted water having the selected pH value. The starting value of $pH_z$ was 7.48. The solid line represents the dependence of $pH_z$ on the reaction time t between the soil and the adjusted acid water with pH = 1.87 as produced by the cascade system. The dash line represents the dependence of $pH_z$ on the reaction time t between the soil and the adjusted basic water having a pH = 11.60 as prepared in the cascade system (Figure 1).

The water flow rate through the cells 5, 50 is preferably from 0 to 20 l/mins.

The values of the electric field applied to the cells 5, 50 by means of the electrodes 9, 10 are substantially from 0.1 V/cm to the electric discharge value between the electrodes 9, 10.

The temperature of the water being processed is from 1 to 70°C.

The ratio of the spacings $V_1$ and $V_2$ of the membrane 8 from the electrodes 9, 10 is preferably from 0.1 and 10.

The magnetic field B applied to the cell is larger than 0.01 T.

More specifically, the membrane 8 can comprise a synthetic material membrane (crosslinked not swelling polypropylene) or a ceramic material membrane connected to a braket 22.

In the case of synthetic material membranes, there will be preferably used membranes with pores having a size from 0.05 $\mu$m to 10 $\mu$m. Pores less than 0.45 mm will prevent the diffusion of viruses or other infective agents. The pores can be made on a charged particle accelerator (cyclotron). The charged particles will obtain the same kinetic energy and, accordingly, their penetration through the membrane will provide pores with the same size within a tolerance of 1%. The density of the pores can be suitably adjusted. The pores are chemically stabilized and their ionic selectivity can be also adjusted. The ionic-permeability of these membranes is very good. They can operate as selective membrane even if in the water to be processed there are present hydrocarbons such as oil waste, as in rivers with a high traffic of boats. In particular, the hydrocarbons can be separated by means of a membrane with pores of reduced size. It is also possible to use modified polymethylacetates or polyester membranes.

The membranes of the ceramic type (calcined clay minerals) have a broader pore distribution while having a very high permeability and microstructural stability taring the electrodialysis. This property is very advantageous in view of the broad application range of the ceramic membranes for processing very aggressive electrolytes (radioactive liquid waste, sea water and the like).

The very high mechanical strength of the ceramic membranes allows in addition to apply a pressure as a propelling or driving force.

The ceramic membrane, in the apparatus for carrying out the method according to the present invention can be combined with a thin cross-linked microporous polymeric membrane plate (for separating toxic molecules, or for ultrafiltering or separating techniques).

A very efficient water processing is obtained by using two plate membranes arranged parallel to one another so as to provide in the cell 5, 5, a a cathode-mexmbrane/membrane-anode sequence. The two membranes will be movable so as to provide a different size of the cell portions constituted by eleetrode-membrane or membrane-membrane pairs depending on the type of the supplied water, the required desalting degree or the end required values for the water pH.

Both in the case of synthetic material membranes and in that of ceramic material membranes, these membranes, in the apparatus according to the invention, can be simply cleaned by reversely switching the electric poles on the electrodes.

In particular, the electrodes 9 and 10 can be metal electrodes or graphite electrodes. They can be displaced on a supporting element 24, the displacement being obtained by four screws 26. The electrode arrangement and package 24 can be affixed by means of inserts, i.e. by coupling them to the outer frame forming the outer construction o f the apparatus.

The metal electrodes can be formed by steel plates, or anti-corrosive platinum plates or platinum nets, or titanium alloy plates.

The graphite electrode is less stable than the metal electrode. It is preferred to a metal electrode as it is required that metal ions are not released into the electrolysis processing.

The current leads are firmly coupled by means of metal clamping elements 23a. The clamping elements will simultaneously clamp the electrodes 9 and 10 to the outer frame 27.

The minimum spacing between the membrane 8 and the electrode 9 or 10 is preferably of 1.5 mm.

The electric power supply, connected to the electrodes 9, 10 will generate a d.c. current with a variable current density and voltage, or with a pulsating current the intensity, voltage and duration of the pulses being adapted to be varied within a frequency cycle. This pulse operation will allow to process the water flow at a comparatively higher voltage without generating polarization effects, or reverse electro-osmotic diffusion effects, and without any development of gas ($Cl_2$, $H_2$, $O_2$) on the electrodes for set frequences.

The pulse operation is suitable for chemical processes, such as the production of nitrogen from air, reduction of water dissolved nitrates, oxidation of alcohols, aldehydes, saccharides, and so on, for desalting radioactive waste, detoxifying water and so on.

A high pulsating voltage supply will provide a quick precipitation of poorly soluble hydroxides ($Ca(OH)_2$, $Mg(OH)_2$, $Sr((OH)_2$, oxohydroxides of rare earth metals and so on) which can be easily removed by decantation. The precipitated material does not coagulate on membrane or electrode surfaces.

With this type of electric power supply, because of the quick transportation of ions through the membranes 8, the desalting of fresh or salted water will be very efficient even with a comparatively high water flow.

By the above mentioned pulsating electric power supply, it is possible to obtain extreme pH values and very good antiseptic properties (pH values less than 0.2 or grater than 13).

The electrodes 9 and 10 can also be supplied with a d.c. not pulsating current provided that the voltage has a comparatively small value (usually less than 1 volt), since a higher voltage would increase the polarization effect and the generation of gas on the electrodes. In this case, the water flow rate must be fitted to the provided pH values and to the antiseptic properties of water.

The electrodes 9 and 10 can be also power supplied by mains transformed and rectified electric current, or by electric batteries, or by a solar power cell for producing personal use drinking water.

In addition or alternatively to the magnetic field, it will be also possible to provide microwaves fields, radiation fields, ultrasound fields, which can be alternatively applied to provide a separation of the acid water from alkaline water, a detoxifying of the water stream or an acceleration of these processes without any addition of chemical agents. The corresponding field will be applied at suitable positions of the walls of the cells 5, 50 of the electrodialysis apparatus, or at clear places of the inlets of the supplied water.

The membrane 8 will separate each cell 5, 50 into a cathode chamber (basic water, catholyte) and into an anode chamber (acid water, anolyte) which will separately communicate with the outlet port 6 or with the outlet port 7.

The catholyte output is driven to a settling tank where from the product will be removed the coagulated components (insoluble metal hydroxides).

The anolyte output is sent to a separate tank.

Between the outlet and water tanks there are provided devices for measuring the water flow rate and adapted to control the aqueous stream.

The values of the water pH in said tanks are controlled by pH measuring devices or pH-meters. These pH-meters are coupled to the electric current-voltage power supply and to flow rate measuring devices affecting or controlling the automatic stabilization of the adjusted water pH value.

The possibility of asymmetrically locating the membrane or membranes 8 will allow to use the apparatus for producing adjusted water with asymmetric pH values from the cathode and anode chambers, with respect to neutral pH water having a pH equal to 7 and with an asymmetric water amount produced by the anode and cathode chambers of the cells 5, 50.

The cascade arrangement will allow the water to pass, during a cycle, for several times through the cathode and anode chambers thereby providing extreme pH values, i.e. a pH less than 1 or a pH greater than 13, respectively.

Since only an acid water has sterile and antiseptic properties the alkaline cathodic water can enter the anodic chamber of the subsequent stage of the cascade system in order to provide sterility. Thus, at least 95% of the processed water can be used as drinking water.

During the processing, hydrogen peroxide, $H_2O_2$, will be generated, mainly on the anode, according to the following reaction:

$$2H_2O - 2e \rightarrow H_2O_2 + 2H^+$$

The possibility of easily fitting all of the physical parameters of the subject apparatus will allow to produce adjusted water having a very low contents of $H_2O_2$.

Said hydrogen peroxide, in particular, will control the sterility and antiseptic properties of the adjusted water. The inhibition of microorganism growth has been verified with respect to Bacillus Subtilis on an agar-agar substrate. The $H_2O_2$ molecule is stabilized within a group of 20 $H_2O$ molecules having a stabilization molar energy of approximatively 63 kJ/mole. The $(H_2O_2)$ $(H_2O)_{20}$ cluster has a sufficient stability to be transported to the membrane of the human cells, where it can operate as an ATP energy/synthetis source while intervening in the membrane transport processes (the so-called tunnel effect).

The cumulative effect of the electric and magnetic fields having an orientation perpendicular to the water stream in the electrodialysis apparatus will accelerate the development of the pH values both in the cathode chamber and in the anode chamber of the cell 5,50 with respect to the isolated effect of the electric field.

The water adjusted by the adjusting method according to the present invention can be broadly used and applied for making drinking water, recultivating soils having extreme pH values, in the food industry such as the food product preserving industry, in the human drug industry, chemical processes, biotechnologic processes, in the decontamination of radioactive waste, in the cosmetic industry, and so on, provided that the quality of water, in dependence on outer parameters applied during the water processing, is well known and provided that the other affecting parameters can be esily controlled.

The quality of the processed water and the precipitated product will frequently require threshold concentrations of the toxic or radioactive components, granular size of the nanocrystalline precipitated products (hydroxides, oxo-hydroxides and so on), and suitable pH values, deionization degree, hydrogen peroxide generation, and $(H_2O_2)$ $(H_2O)_{20}$.

These parameters can be all adjusted by the apparatus and method according to the present invention.

Very important aspects related to the application of the processed water in the medical field are that they allow to prepare either acid or alkaline solutions of the re-distilled water, in which the electrolytic conductivity is triggered by adding $H_2O_2$. Such a method can be used for preparing physiologic solutions.

In irrigated soils, for which there are provided or water supplies or fall type irrigating devices for providing water in the form of drops, these two means can be advantageously applied to supply water to the soil with the aqueous liquid adjusted in the electrodialysis apparatus according to the present invention. The method for improving the pH value of very acid or alkaline soils by means of the aqueous fluid physically adjusted with suitable pH values, is a very unexpensive and efficient method. The cost thereof represents only 10% of the cost required for processing soils by limestone, and, in the meanwhile, the proposed procedure provides a process which is favorable from the environmetal standpoint, thereby the subject method can have an international importance since the acid-alkaline soils are undesirably increasing.

Thereinbelow will be disclosed, by way of a mere indicative and not limitative example, two operating Examples showing a possible use of the adjusted water the pH of which has been adjusted by the adjusting method according to the present invention, and, more specifically, for processing soils.

## EXAMPLE 1

The object of this experiment has been that to study the influence of the adjusted water on the pH value variations of two different soils (I and II), having different pH values, with respect to the influence of distilled water.

10 g of soil (I and II) have been mixed and stirred 50 $cm^3$ of adjusted water (acid, distilled or basic) in polyehtylene vessels of 100 $cm^3$. After a day (24 hours) the pH values of suspensions, in consequence of the water activity, have been monitored or controlled. Upon stirring again, the suspensions have been held in a rest condition for the water activity for other 6 days (in total 7 days). The pH vallues of the suspensions have been controlled again. The measured pH values have been resumed in the accompanying Table 1. They represent the average values of five parallel measurements.

## EXAMPLE 2

The object of this experiment has been that of monitoring the influence of the adjusted water having an adjustable pH on the concentrations of Na, K and Ca in soils and on the variation of the starting pH of the soils. The experiment has been carried out under the following laboratory conditions:

10 g of the analyzed soil, with a starting pH value of 7.48 have been weighed and introduced into polyethylene bottles. Five parallel samples have been each stirred with 50 ml of water adjusted to a pH of 1.87, five other samples have been stirred with 50 ml of water adjusted to a pH of 11.60 and yet further five soil samples have been mixed with the starting water having a pH of 7. The pH values of the soil samples have been controlled after 24 hours for all of the 15 sammples. Each bottle has been then processed in a centrifuge apparatus, at 10,000 RPM's for 10 minutes. The transparent or clear solutions have been poured away upon decanting. Five corresponding samples have been then stirred with 50 ml of adjusted acid water (pH=1.87), five other corresponding samples have been stirred with basic water (pH=11.60), and, lastly, yet five other samples have been stirred with the starting water (pH=7). After 24 hours, the soil pH values were controlled again. After further 24 hours (the total reaction time was of 72 hours), the soil sample pH values were controlled again, and all of the bottles were centrifuged for 10 minutes, and the clear solutions have been used for analysis purposes after decanting. After 48 hours (the total reaction time was of 120 hours), the soil sample pH values were controlled again, all the bottles being centrifuged for 10 minutes, and the clear solutions being used, after decanting, for the end analysis.

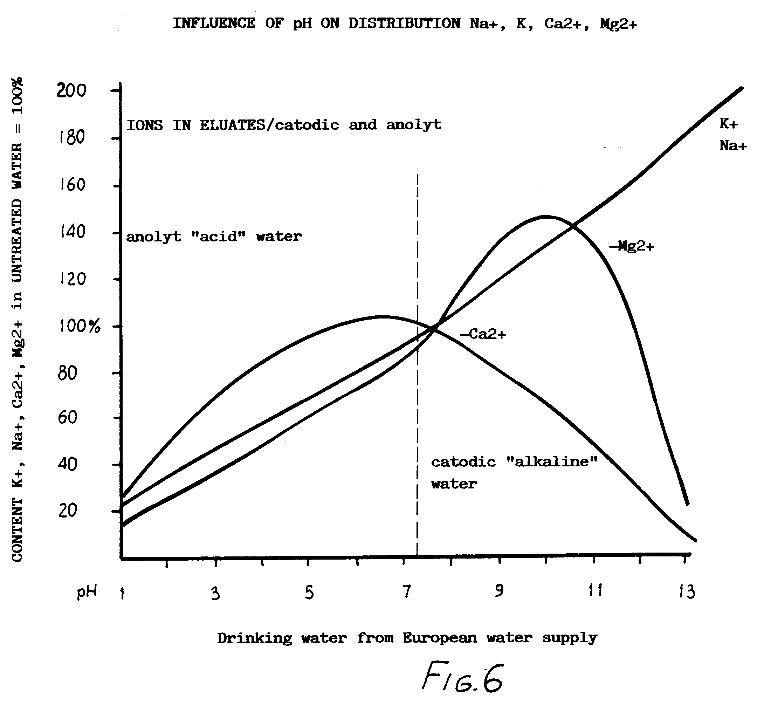

For all of the decanted clear solutions has been determined the concentration of Ca, K and Na. It has been found (see Table 2) that the removal of the soil components Na and K by means of the adjusted acid water, with respect to the starting water, provides only a small yield. However, a significative removal of Ca has been obtained. The adjusted basic water removes or withdraws, with respect to the starting water, only a small amount of K, but a comparatively greater amount of Na. The component Ca was not practically removed by the adjusted basic water, because the Ca compound (mainly calcium carbonate), at an effective pH value can not be removed since said compound is not dissolved by basic water. The different reaction of the acid water and basic water can be also used for improving the over-salted soils or the soils containing excessive amounts of calcium carbonate, since such a great amount of calcium carbonate can be decomposed and washed away by the acid water. The results are resumed in Table 2 and Figure 6.

## TABELLA 1

**The influence of processed (adjusted) water on the variation of the pH values of two different soils having different pH values with respect to the influence of distilled water**

|  | Soil suspension I | | | Soil suspension II | | |
|---|---|---|---|---|---|---|
| Soil starting pH value | $(pH)_I = 5,70$ | | | $(pH)_{II} = 7,60$ | | |
| Applied water | acid | distilled | basic | acid | distilled | basic |
| Applied water pH value | 2,00 | ~7.00 | 10.58 | 2.00 | ~7.00 | 10.58 |
| Value of the suspension pH after a day | 5.18 | 5.66 | 6.10 | 7.07 | 7.41 | 7.68 |
| after seven days | 5.77 | 6.52 | 6.75 | 7.39 | 7.50 | 7.70 |
| pH value difference | | | | | | |
| pH (7 days)–pH (1 day) | 0.59 | 0.86 | 0.65 | 0.32 | 0.09 | 0.02 |
| pH (7 days)–pH (starting soil) | 0.07 | 0.82 | 1.05 | -0.21 | -0.10 | +0.1 |
| pH (7 days) – 7 | -1.23 | -0.48 | -0.25 | +0.39 | +0.50 | +0.70 |

## TABLE 2

### Elution of sodium, potassium and calcium fron a soil having a pH activity of 7.48 by means of adjusted water and not adjusted water

| pH of the applied water | Amount of eluted element in mg for kg of soil | | | |
|---|---|---|---|---|
| | After 1 day | After 3 days | After 5 days | sum |
| | S O D I U M | | | |
| 1.87 | 1.95 | 0.24 | 0.18 | 2.37 |
| 7.00 | 1.25 | 0.23 | 0.16 | 1.64 |
| 11.60 | 8.10 | 7.05 | 8.55 | 23.70 |
| | P O T A S S I U M | | | |
| 1.87 | 2.00 | 0.90 | 0 90 | 3.80 |
| 7.00 | 1.30 | 2.10 | 1.20 | 4 60 |
| 11.60 | 1.35 | 3.20 | 2.00 | 6.55 |
| | C A L C I U M | | | |
| 1.87 | 11.85 | 3.70 | 4.40 | 19.95 |
| 7.00 | 5.10 | 0.20 | 0.50 | 5.80 |
| 11.60 | 2.20 | 0.25 | 0.50 | 2.95 |

The method according to the invention and the apparatus for carrying out said method are susceptible to several variations and modifications all of which will come within the scope of the invention.

### Claims

1. A method for adjusting the value of the pH of water in a range from 1 to 13, characterized in that the adjustment of the value of the pH of water is carried out in at least a stage of a cascade system, said stage comprising an electrodialysis cell with at least a controllably movable membrane which can be displaced between the electrodes (cathode and anode) perpendicularly to the water flow through said cell, for a variation of the adjustment of the pH of water processed in said cell.

2. A method according to Claim 1, characterized in that the adjustment of the pH is performed by sequentially traversing a plurality of cascade arranged electrodialysis cells.

3. A method according to Claim 1, characterized in that water is recirculated through one or more of said cascade arranged electrodialysis cells.

4. A method according to Claim 1, characterized in that the values of the electric field applied to said cells are substa-ntially included between 0.1 volt/cm and the electrode electric discharge value.

5. A method according to Claim 1, characterized in that to said cells there is applied a magnetic field.

6. A method according to Claim 5, characterized in that the magnetic induction value of said magnetic field is greater than 0.01 T.

7. A method according to Claim 1, characterized in that the water flow rate through said cells is substantially included between 0 and 20 litres/minute.

8. A method according to Claim 1, characterized in that the temperature of the water being processed in said cells is substantially included between 1 and 70°C.

9. A method according to Claim 1, characterized in that the electric field applied to said cell is a continuous electric field.

10. A method according to Claim 1, characteriwed in that the electric field applied to said cell is a pulsating electric field.

11. A method according to Claim 1, characterized in that the processed aqueous liquid is withdrawn from any of said cascade arranged cells.

12. An apparatus for adjusting the pH of water in the range from 1 to 13, characterized in that said apparatus comprises at least an electrodialysis cell with two inlet ports and two outlet ports for the water flow, two electrodes (cathode and anode) arranged in said cell and at least a membrane arranged between said two electrodes and dividing said cells into an anode chamber and a cathode chamber, said membrane being adapted to be controllably driven along a direction perpendicular to the water flow through said cell for changing its distance from said electrodes so as to change the pH of the processed water.

13. An apparatus according to Claim 12, characterized in that said apparatus further comprises a plurality of cascade arranged electrodialysis cells.

14. An apparatus according to Claim 12, characterized in that each cell includes two inlet ports and two outlet ports coupled to a subsequent electrodialysis cell, along the duct coupling an electrodialysis cell to a next electrodialysis cell being provided a first branch for recirculating processed water in the direction of the preceding electrolysis cell and a further branch for unloading the processed water.

15. An apparatus according to Claim 12, characterized in that said apparatus further comprises a pump for recirculating water through said electrodialysis cells.

16. An apparatus according to Claim 12, characterized in that said cells comprises cell walls to which there are applied at least two magnets for applying a magnetic field to the water being processed in said cell.

17. An apparatus according to Claim 12, characterized in that said membrane comprises a ceramic membrane.

18. An apparatus according to Claim 12, characterized in that said membrane is made of cross-linked polypropylene.

19. An apparatus according to Claim 12, characterized in that near said cell there are provided ultrasound field generators.

20. An apparatus according to Claim 12, characterized in that said apparatus comprises microwave field generators interacting with the water to be processed in said cell.

21. A method for improving the properties of a very acid or alkaline soil, characterized in that it comprises the step of using water adjusted by the method and apparatus according to one or more of the preceding claims.

22. A method for improving the properties of a very acid or alkaline soil, according to Claim 21, characterized in that for the processing of acid soils there is used adjusted water having a pH value greater than 7, or a combination of adjusted acid water and basic water.

23. A method for improving the properties of a very acid or alkaline soil, according to Claim 21, characterized in that for processing alkaline soils there is used adjusted water having a pH value less than 7 or a combination of adjusted acid water and basic water.

Fig. 1

FIG. 2

$E = E_0$

$B = B_0$

$V_V = V_{Vo}$

$pH = 7$

$\dfrac{V_1}{V_2} = 1$

$\dfrac{V_1}{V_2} = 10$

FIG. 3

$t$ [min]

$$E = E_o$$
$$B = B_o$$
$$V = V_{V_o}$$

$$pH = 7$$

Fig. 4

$pH_z = 7,48$

FIG.5

# INFLUENCE OF pH ON DISTRIBUTION Na+, K, Ca2+, Mg2+

Drinking water from European water supply

FIG.6

EP 0 642 824 A1

**European Patent Office**

## EUROPEAN SEARCH REPORT

Application Number

EP 94 83 0385

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE-A-32 33 283 (BUCKAU-WALTER AG) --- | | B01D61/44 C02F1/469 |
| A | FR-A-1 223 965 (AMERICAN MACHINE & FOUNDRY CO.) --- | | |
| A | FR-A-2 645 292 (FRAMATOME) --- | | |
| A | US-A-3 349 021 (J. H. BROWN ET AL.) --- | | |
| A | FR-A-1 084 341 (IONICS INC.) ----- | | |

**TECHNICAL FIELDS SEARCHED (Int.Cl.6)**

B01D
C02F

The present search report has been drawn up for all claims

| Place of search | Date of completion of the search | Examiner |
|---|---|---|
| THE HAGUE | 15 November 1994 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)